Europäisches Patentamt

(19) European Patent Office

Office européen des brevets

(11) Veröffentlichungsnummer: **0 191 377**
**B1**

(12) **EUROPÄISCHE PATENTSCHRIFT**

(45) Veröffentlichungstag der Patentschrift:
10.05.89

(51) Int. Cl.⁴: **F 16 C 33/66**

(21) Anmeldenummer: **86101220.1**

(22) Anmeldetag: **30.01.86**

(54) **Lagergehäuse mit einem eine horizontale Welle umschliessenden Wälzlager.**

(30) Priorität: **11.02.85 DE 3504567**

(43) Veröffentlichungstag der Anmeldung:
**20.08.86 Patentblatt 86/34**

(45) Bekanntmachung des Hinweises auf die Patenterteilung:
**10.05.89 Patentblatt 89/19**

(84) Benannte Vertragsstaaten:
**AT CH DE FR LI NL**

(56) Entgegenhaltungen:
**DE-B-1 202 595**
**FR-A-2 264 217**
**GB-A-22 755**
**GB-A-758 758**
**US-A-1 909 031**
**US-A-1 934 278**
**US-A-2 445 432**
**US-A-3 298 760**
**US-A-4 037 890**

**PRODUCT ENGINEERING, Band 32, Nr. 32, 7. August 1961, Seite 14, McGraw-HILL, New York, US; "This oil-bath design improves bearing performance"**

(73) Patentinhaber: **Siemens Aktiengesellschaft Berlin und München, Wittelsbacherplatz 2, D-8000 München 2 (DE)**

(72) Erfinder: **Schabert, Hans- Peter, Dipl.- Ing., Friedrich- Bauer- Strasse 28, D-8520 Erlangen (DE)**
Erfinder: **Zach, Klaus, Dipl.- Ing. (FH), Schwedler Strasse 29, D-8520 Erlangen (DE)**

## Beschreibung

Die Erfindung betrifft ein Lagergehäuse mit einem eine horizontale Welle umschließenden Wälzlager, das von einem mindestens 3 cm tiefen Ölsumpfraum durch eine Stauwand getrennt ist, deren Oberkante an ihrer tiefsten Stelle über dem Ölspiegel im Ölsumpfraum liegt, wobei unter der Oberkante eine Verbindung zwischen dem Wälzlager und dem Ölsumpfraum vorgesehen ist und die Verbindung eine Leitung umfaßt, die in die untere Hälfte des Ölsumpfraumes hinunterreicht.

Bei einem solchen, in der FR-A-2 264 217 beschriebenen Lagergehäuse wird das Öl mit einer Pumpen- oder Schleuderscheibe nach oben gefördert, so daß es über einen Kanal zum Wälzlager hinunter rinnen kann, das oberhalb des Ölspiegels in dem Ölsumpfraum liegt. Mit der Schleuderscheibe ergibt sich aber, wie in dem Buch "Die Wälzlagerpraxis", R. Oldenbourg Verlag 1978, S. 232 ff ausgeführt ist, eine zusätzliche Wärmeentwicklung und Verwirbelung, die zu Schaumbildung führt und die Alterung des Öls beschleunigt.

Bei einem anderen Lagergehäuse, das in dem Buch "Die Wälzlagerpraxis", Seite 230, Bild 277, dargestellt ist, soll nach Seite 229 mit einer sogenannten Tauchschmierung das Lager, dessen tiefste Wälzkörperoberfläche unter dem Spiegel des Ölsumpfes liegt, auch gekühlt werden. Dabei wird mit der Stauwand, in der Verbindungslöcher angebracht sind, vermieden, daß der ganze Ölvorrat im Lagergehäuse herumgewirbelt wird und sich dabei stark erwärmt. Andererseits ist dort auch gesagt, daß eine größere Oberfläche eine bessere Wärmeabfuhr ermöglicht. Die Erfindung geht daher von der Aufgabe aus, eine gute Wärmeabfuhr über eine große Gehäuseoberfläche auch ohne starke Ölverwirbelung zu erreichen.

Erfindungsgemäß ist ein Lagergehäuse der eingangs genannten Art so ausgebildet, daß der Ölspiegel höher als die tiefste Oberfläche eines Wälzkörpers des Wälzlagers liegt, das als Pumpe einer über das Lager führenden Ölströmung dient, und daß die Verbindung die Saugleitung der Ölströmung bildet und einen Drosselquerschnitt aufweist.

Bei der Erfindung wird die Wärmeabfuhr dadurch verbessert, daß der Ölsumpf mit seinem ganzen Volumen als Kühlmedium und zur Wärmeableitung an eine große Gehäuseoberfläche verwendet wird. Mit Hilfe der Verbindungsleitung, die zwischen der unteren Hälfte des Ölsumpfraumes und dem Wälzlagerraum verläuft und als "Ansaugleitung" dient, wird eine Ölströmung in Gang gesetzt, die wie bei dem aus der FR-A-2 264 217 bekannten Lager für einen Temperaturausgleich über das gesamte Ölvolumen im Ölsumpf sorgt und damit die Ölaufheizung verringert. Gleichzeitig wird die Wärmeableitung an das Lagergehäuse im Ölsumpfbereich verbessert, weil auch die unteren Partien des Lagergehäuses stärker erwärmt werden und damit mehr zur Wärmeabgabe beitragen. Dies alles gelingt ohne die mit Schleuderscheiben verursachte zusätzliche Wärmeentwicklung und Verwirbelung sowie Schaumbildung.

Die Erfindung kann so ausgebildet werden, daß die Leitung eine Bohrung im Lagergehäuse ist. Alternativ verwendet man als Leitung ein zusätzliches Rohr, das dann leicht zu beliebigen Stellen am Boden des Lagergehäuses geführt werden kann, damit eine intensive Wärmeabfuhr gelingt.

Eine besonders vorteilhafte Ausführungsform der Erfindung besteht darin, daß eine Fördereinrichtung, die Öl in den Ölsumpfraum zurückfördert, in Form eines engen Spaltes in einem Teil des Wälzlagerraums vorgesehen ist, in dem der bewegliche Teil des Wälzlagers nach oben verläuft, und daß der Spalt über die tiefste Steile der Oberkante hinaus zu einer Auslaßöffnung reicht, die aus dem Bereich des Wälzlagers in den Ölsumpfraum führt. Dabei kann der Spalt von der Stauwand begrenzt werden. Er führt vorteilhaft zu mehreren, in der Höhenlage verschiedenen Auslaßöffnungen, mit denen der Ölstand im Lager bestimmt werden kann. Er wirkt seinerseits auf die Förderwirkung des Lagers ein und bestimmt über den Rückfluß des Öls aus dem Lager auch in Grenzen die mit dem Öl bewirkte Wärmeabfuhr.

Die Auslaßöffnung kann mit ihrem dem Wälzlager zugekehrten Ende einen gegen die Bewegungsrichtung des Wälzlagers gerichteten Keil bilden. Ein solcher Keil ergibt besonders dann, wenn seine Spitze am Wälzlager dicht anliegt, eine Schneidenwirkung, mit der das mit dem Wälzlager mitlaufende Öl vom Wälzlager abgeschält wird. Diese Wirkung ergibt sich auch dann, wenn eine vom Ölsumpfraum zum Wälzlager führende Bohrung an ihrem dem Wälzlager zugekehrten Ende konisch verjüngt ist.

Der Spalt zwischen der Stauwand und dem Wälzlager kann vorteilhaft von einer Ringscheibe begrenzt werden, die an einer Stirnseite des Wälzlagers angeordnet ist und auf der dem Wälzlager abgekehrten Seite ein Rohr aufweist, das die Verbindungsleitung zwischen dem Ölsumpfraum und dem Wälzlagerraum bildet.

Das Rohr kann zu praktisch beliebigen Stellen des Ölsumpfraumes geführt werden, so daß die gewünschte Strömung im Ölsumpfraum angeregt wird. Vorteilhaft ist es, wenn das Rohr in eine Vertiefung in der dem Wälzlager zugekehrten Seite der Ringscheibe führt, die einen mehrfach größeren Querschnitt als das Rohr aufweist.

Mit dieser Vertiefung wird eine Verteilertasche geschaffen, die eine gleichmäßige Ölströmung durch die Verbindungsleitung ergibt. Das der Scheibe abgekehrte Ende des Rohres kann durch eine Bohrung im Lagergehäuse zugänglich gemacht werden. Dies ergibt eine Reinigungsmöglichkeit für den Fall, daß der Eingang des Rohres als Engstelle durch Verunreinigungen verstopft wird.

Die mit der Erfindung erreichte Verstärkung der Ölströmung im Ölsumpf kann schon dadurch erreicht werden, daß der Spalt nur an einer Stirnseite des Wälzlagers vorgesehen und die andere Seite des Wälzlagers abgedichtet ist. Darüber hinaus ist es bei einem Lagergehäuse mit mehr als einem Wälzlager oft schon ausreichend, wenn nur eines dieser Wälzlager mit der bei der Erfindung vorgesehenen, zum Boden des Ölsumpfes führenden Leitung versehen ist.

Die Anwendung eines bekannten Lüfterrads auf der Pumpenwelle könnte die Wärmeabfuhr von der Oberfläche des Lagergehäuses um ein Vielfaches steigern im Vergleich zur Kühlung in ruhender Umgebungsluft. Das bekannte Lüfterrad hat aber den Nachteil, daß es eine Sogwirkung auf die Dichtung der Welle zum Lagergehäuse ausübt und daß dadurch ein Luftzug durch das Lagergehäuse entsteht. Dies kann bei Langzeitigem Betrieb ohne Wartungsmöglichkeit, wie er beispielsweise in Kernkraftwerken gefordert wird, zu unzulässigem Ölverlust führen. Um diesen zu verhindern, kann man zwar anstelle einer berührungslosen Dichtung eine Berührungsdichtung einsetzen; man wird dann aber abhängig von deren verschleißbedingter Unzuverlässigkeit. Außerdem erzeugt eine Berührungsdichtung ihrerseits neue Reibungswärme. Es ist daher vorteilhaft, die Luftbewegung um das Lagergehäuse, wenn überhaupt, dann nur schwach anzuregen etwa mit Hilfe der ohnehin vorhandenen Wellenkupplung. Die Verbesserung der Gehäusekühlung ist dann zwar geringer, jedoch immer noch deutlich, dagegen sind Ölverluste und Dichtungsreibung ausgeschlossen.

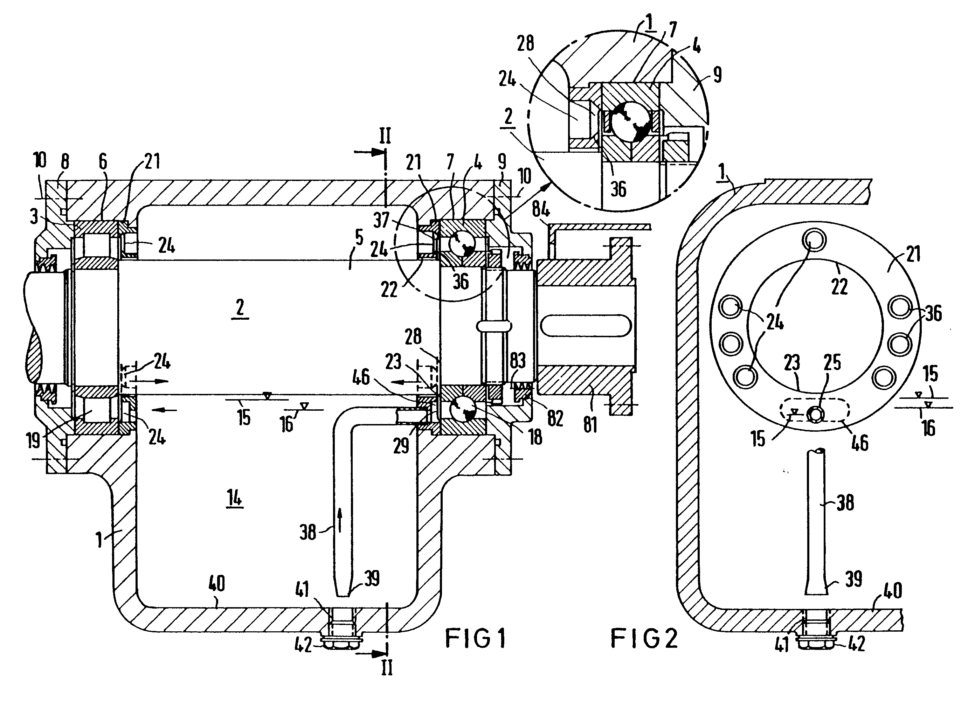

Zur näheren Erläuterung der Erfindung werden anhand der beiliegenden Zeichnung zwei Ausführungsbeispiele beschrieben. Dabei sind den Fig. 1, 2 und 3, 4 in jeweils zwei zueinander senkrechten Schnitten die Lagergehäuse von Pumpen dargestellt, die in Hilfsanlagen von Kernkraftwerken, zum Beispiel als Sicherheitseinspeisepumpen, eingesetzt werden und deshalb zuverlässig und störungsfrei arbeiten müssen.

In den Fig. 1 und 2 ist in zwei zueinander senkrechten Vertikalschnitten das aus Gußeisen bestehende Lagergehäuse 1 einer einstufigen Pumpe mit einer Drehzahl von 980 Upm, einer Förderleistung von 1000 m³/h und einer Förderhöhe von 90 m gezeichnet, das eine horizontalliegende Welle 2 mit einem Durchmesser von 140 mm umschließt. Die Welle ist mit zwei Wälzlagern 3 und 4 zu beiden Seiten eines verdickten Bereiches 5 gehalten, an dem die Wälzlager anliegen. Die Außenseiten der Wälzlager 3, 4 sind in Ausdrehungen 6, 7 des Lagergehäuses 1 eingesetzt und mit Deckeln 8 und 9 gehalten, die mit Schrauben 10 befestigt sind.

Die Fig. 1 und 2 zeigen deutlich, daß das Lagergehäuse 1 unter der Welle 2 einen großvolumigen Ölsumpfraum 14 bildet, der einen im wesentlichen quadratischen Querschnitt von mehr als 10 cm Kantenlänge hat. Der Ölstand im Ölsumpfraum 14 hat bei dem maximalen Ölspiegel 15 eine Höhe von 10,5 und bei dem minimalen Ölspiegel 16 eine Höhe von 10,0 cm. Damit liegt er über der tiefsten Oberfläche des jeweils untersten Wälzkörpers, der für das Lager 4 durch die Kugel 18 und das Lager 3 durch die Walze 19 dargestellt ist.

Bei beiden Wälzlagern 3 und 4 ist als Stauwand gegenüber dem Ölsumpfraum 14 in die für die Aufnahme der Wälzlager vorgesehene Eindrehung 7, 8 eine Ringscheibe 21 eingesetzt. Ihre der Welle 2 zugekehrte Oberkante 22 liegt an der tiefsten Stelle 23, wie man sieht, über dem höchsten Ölspiegel 15 des Ölsumpfraumes, so daß die Stauwand den Ölsumpfraum vom Wälzlagerraum trennt. Die Räume sind nur durch Bohrungen 24 in den Ringscheiben 21 verbunden, die oberhalb des Ölspiegels 15, 16 liegen, und durch jeweils eine Bohrung 25 kommt eine Verbindung zustande, die unterhalb des Ölspiegels 15, 16 liegt.

Die Bohrungen 25 haben mit 8 mm Durchmesser einen Querschnitt von etwa 50 mm² und üben deshalb eine Drosselwirkung auf Öl aus, das beim Laufen der Pumpe durch die Drehbewegung der Wälzlager 3 und 4 aus dem Ölsumpfraum 14 angesaugt und nach oben gefördert wird.

Das Öl läuft in einem Spalt 28 zwischen der dem Ölsumpfraum 14 zugekehrten Seite 29 der Wälzlager 3, 4 und der Ringscheibe 21, die an der den Wälzlagern 3 und 4 zugekehrten Seite mit einer den Spalt 28 bildenden Vertiefung 29 versehen ist.

Die für den Rücklauf des mitgerissenen Öls in der Ringscheibe 21 vorgesehenen Bohrungen 24 min 20 mm Durchmesser liegen symmetrisch auf unterschiedlicher Höhe. Die Bohrungen 24 haben an ihren den Wälzlagern 3 und 4 zugekehrten Enden eine konische Verengung 36. Sie bildet eine Schneidenkante 37, die an den Spalt 28 heranreicht und aus dem mit dem Wälzlager 3, 4 mitgerissenen Ölstrom einen bestimmten Teilstrom abschneidet. Damit ergibt sich eine durch die Größe der Bohrungen 24 und Verengungen 36 bestimmte Ölmenge mit einer durch die Lage der Bohrungen 24 bestimmten Verteilung über die Höhe der Wälzlager 3, 4 als ständiger Durchsatz ab einer unter der Nenndrehzahl der Pumpe gelegenen Drehzahl, zum Beispiel bei 80 % der Nenndrehzahl. Diese gleichmäßige und vor allem zerstäubungsfreie Ölströmung sorgt für eine gleichmäßige Schmierung und Kühlung der Wälzlager.

An die Bohrung 25 des Lagers 4 ist eine Rohrleitung 38 mit 12 mm Durchmesser und zum Beispiel 1 mm Wandstärke angeschlossen, die zum unteren Ende des Ölsumpfraumes 14 führt Die Mündung 39 des Rohres 38 liegt nämlich nur wenige Millimeter über dem Boden 40 des Ölsumpfraumes 14. Damit ergibt sich eine Strömung im Ölsumpfraum, die dafür sorgt, daß das beim Umlauf durch die Lager 3, 4 erwärmte Öl über das ganze Volumen des Ölsumpfraumes 14 verteilt wird. Das Öl kann somit seine Wärme über die gesamte Fläche des Lagergehäuses 1 abgeben, die den Ölsumpfraum 14 einschließt.

Wie die Fig. 1 zeigt, ist an dem der Mündung 39 gegenüberliegenden Teil des Bodens 40 des Ölsumpfraumes 14 eine Ölablaß-Bohrung 41 mit einer Verschlußschraube 42 angebracht. Dies macht es möglich, die Mündung 39 nach dem Ablassen des Öls zu inspizieren und zu reinigen, wenn dort in einem verengten Bereich Ablagerungen vorkommen sollten, der zur Erzeugung der gewünschten Drosselwirkung durch Quetschen des Rohres 38 erzeugt ist.

Aus der Fig. 2 ist ersichtlich, daß die mit dem Rohr 38 beschickte Bohrung 25 der Ringscheibe 21 in eine in die Scheibe 21 eingelassene Verteilertasche 46 führt. Die Verteilertasche 46, die zum Beispiel 6 mm tief ist, hat, wie aus der Fig. 2 ersichtlich, im wesentlichen horizontale Ausdehnung. Sie sorgt dafür, daß das aus dem Ölsumpfraum 14 durch das Rohr 38 angesaugte Öl gleichmäßig an das Wälzlager 4 herangeführt wird. Eine entsprechende Verteilertasche kann aber auch in der Scheibe des Wälzlagers 3 vorgesehen sein, bei der auf ein in die Tiefe des Ölsumpfraumes 14 führendes Rohr verzichtet werden kann, weil schon mit dem dem Wälzlager 4 zugeordneten Rohr 38 eine ausreichend gleichmäßige Durchwärmung des Ölsumpfraumes 14 sichergestellt ist.

In der Fig. 1 ist weiterhin eine Kupplungshälfte 81 am Ende der Welle 2 befestigt, die gegenüber dem Lagergehäuse 1 durch einen berührungslosen Labyrinthring 82 mit Ölrücklaufbohrung 83 abgedichtet ist. Ein Schutzblech 84 verhindert die unbeabsichtigte Berührung der laufenden Kupplung und die damit verbundene Unfallgefahr. Dieses Schutzblech 84 kann so geformt sein, daß es die von der Kupplung erzeugte Luftbewegung in Richtung zum Lagergehäuse 1 hin umlenkt und dadurch die Kühlung durch die Umgebungsluft unterstützt. Der die Kupplung 81 antreibende, nicht dargestellte Elektromotor ist wassergekühlt, sorgt also nicht seinerseits für einen kühlenden Luftzug um das Lagergehäuse 1.

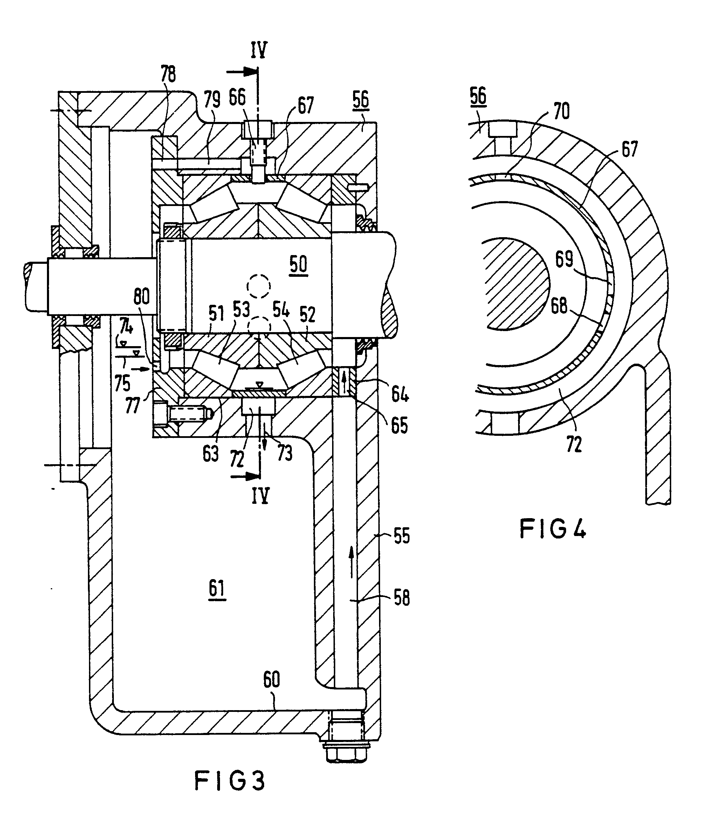

Das Ausführungsbeispiel nach den Fig. 3 und 4 stellt das kombinierte Axial- und Radiallager einer mehrstufigen Pumpe mit einer Drehzahl von 2950 Upm, einem Förderstrom von 220 m³/h und einer Förderhöhe von 1100 m dar. Die Welle 50 ist mit einem Doppellager 51, 52 mit konischen Wälzkörpern 53, 54 ausgerüstet (Kegelrollenlager). Hierbei ist in der Seitenwand 55 des Lagergehäuses 56 eine Bohrung 58 vorgesehen, die von der Unterseite 60 des Ölsumpfraumes 61 zur Welle 50 führt. Im Zuge der Bohrung 58 liegt im Bereich einer Horizontalbohrung 63, in die die Lager 51, 52 eingesetzt sind, ein Ring 64 mit einer Drosselbohrung 65, die wiederum einen Querschnitt von etwa 50 mm² haben kann. Diese Bohrung 65 regelt den Ölzufluß zum Lager 52.

Zwischen den Wälzlagern 51, 52 sitzt an der Außenseite ein mit einer Schraube 66 fixiertes Rohrstück 67, das, wie die Fig. 4 zeigt, um den Umfang verteilte Bohrungen 68, 69 und 70 mit je 15 mm Durchmesser aufweist. Die unterste Bohrung 68 liegt um 10 mm über dem normalen zulässigen Ölspiegel 74 im Ölsumpfraum. Auf der nicht dargestellten Gegenseite sind die Bohrungen symmetrisch angeordnet. Diese Bohrungen bilden in beiden Drehrichtungen der Pumpe einen Auslaß für das von den Wälzlagern 51, 52 angesaugte und mitgeführte Öl, das damit zügig aus dem Wälzlagerbereich entfernt wird. In dem auf der Außenseite des Rohrstückes 67 gelegenen Ringraum 72 sammelt sich das Öl und fließt dann, wie der Pfeil 73 andeutet, in den Ölsumpfraum 61 zurück.

Auch bei dem Ausführungsbeispiel nach den Fig. 3 und 4 ist durch die zum Boden 60 des Ölsumpfraumes 61 hindurchführende Leitung 58 für eine Durchmischung des gesamten Ölvorrates im Ölsumpfraum 61 gesorgt, dessen Ölspiegel bei 74 für den Maximalstand und bei 75 für den Minimalstand angedeutet ist.

In Fig. 3 ist noch zu sehen, daß in dem Flansch 77, mit dem die Wälzlager 51, 52 in der Bohrung 63 festgelegt sind und der die Stauwand zwischen den Wälzlagern 51, 52 und dem Ölsumpfraum 61 bildet, eine Entlüftungsbohrung 78 vorgesehen sein kann, die sich durch eine Bohrung 79 im Lagergehäuse 56 bis zur Oberseite des Ringraumes 72 erstreckt. In dem Flansch 77 kann ferner eine Drosselbohrung 80 vorgesehen sein, die den Zutritt von Öl für das Lager 51 ermöglicht.

**Patentansprüche**

1. Lagergehäuse mit einem eine horizontale Welle (2) umschließenden Wälzlager (4), das von einem mindestens 3 cm tiefen Ölsumpfraum (14) durch eine Stauwand (21) getrennt ist, deren Oberkante (23) an ihrer tiefsten Stelle über dem Ölspiegel (15, 16) im Ölsumpfraum liegt, wobei unter der Oberkante eine Verbindung (25, 38) zwischen dem Wälzlager und dem Ölsumpfraum vorgesehen ist und die Verbindung eine Leitung umfaßt, die in die untere Hälfte des Ölsumpfraumes hinunterreicht, dadurch gekennzeichnet, daß der Ölspiegel (15, 16) höher als die tiefste Oberfläche eines Wälzkörpers (18) des Wälzlagers (4) liegt, das als Pumpe einer über das Lager (4) führenden Ölströmung dient, und daß die Verbindung (25, 38) die Saugleitung der Ölströmung bildet und einen Drosselquerschnitt (25) aufweist.

2. Lagergehäuse nach Anspruch 1, dadurch gekennzeichnet, daß die Leitung (58) eine Bohrung im Lagergehäuse (56) ist (Fig. 3).

3. Lagergehäuse nach Anspruch 1 oder 2, dadurch gekennzeichnet, daß zum Rückfluß des Öls vom Wälzlagerbereich zum Ölsumpfraum (61) Öffnungen (68, 69, 70) vorgesehen sind, deren Niveau zwischen der Wellenmitte und dem maximal zulässigen Ölspiegel (74) im Ölsumpfraum (61) liegt.

4. Lagergehäuse nach Anspruch 3, dadurch gekennzeichnet, daß oberhalb der Wellenmitte eine Öffnung (78, 79) vorhanden ist, die der Entlüftung zum Ölsumpfraum (61) hin dient.

5. Lagergehäuse nach einem der Ansprüche 1 bis 4, dadurch gekennzeichnet, daß eine Fördereinrichtung, die Öl in den Ölsumpfraum zurückfördert, in Form eines engen Spaltes (28) in einem Teil des Wälzlagerraums vorgesehen ist, in dem der bewegliche Teil des Wälzlagers (4) nach oben verläuft, und daß der Spalt (28) über die tiefste Stelle (23) der Oberkante (22) hinaus zu einer Auslaßöffnung (24) reicht, die aus dem Bereich des Wälzlagers (4) in den Ölsumpfraum (14) führt.

6. Lagergehäuse nach Anspruch 5, dadurch gekennzeichnet, daß der Spalt (28) von der Stauwand (22) begrenzt wird.

7. Lagergehäuse nach Anspruch 5 oder 6, dadurch gekennzeichnet, daß der Spalt (28) zu mehreren in der Höhenlage verschiedenen Auslaßöffnungen (24) führt.

8. Lagergehäuse nach Anspruch 5, 6 oder 7, dadurch gekennzeichnet, daß die Auslaßöffnung (24) mit ihrem dem Wälzlager (4) zugekehrten Ende (36) einen gegen die Bewegungsrichtung des Wälzlagers (4) gerichteten Keil bildet.

9. Lagergehäuse nach Anspruch 8, dadurch gekennzeichnet, daß die Spitze des Keils (36) am Wälzlager anliegt.

10. Lagergehäuse nach einem der Ansprüche 5 bis 9, dadurch gekennzeichnet, daß der Spalt (28) von einer Ringscheibe (21) begrenzt wird, die an einer Stirnseite des Wälzlagers (4) angeordnet ist und auf der dem Wälzlager (4) abgekehrten Seite ein Rohr (38) aufweist, das die Verbindungsleitung zwischen dem Ölsumpfraum (14) und dem Wälzlagerraum (4) bildet.

11. Lagergehäuse nach Anspruch 10, dadurch gekennzeichnet, daß das Rohr (38) in eine Vertiefung (46) in der dem Wälzlager (4) zugekehrten Seite der Ringscheibe (21) führt, die einen mehrfach größeren Querschnitt als das Rohr (38) aufweist.

12. Lagergehäuse nach Anspruch 10 oder 11, dadurch gekennseichnet, daß das der Scheibe (21) abgekehrte Ende (39) des Rohres (38) durch eine Bohrung (41) im Lagergehäuse zugänglich ist.

13. Lagergehäuse nach einem der Ansprüche 1 bis 12, dadurch gekennzeichnet, daß der Spalt (28) nur an einer Stirnseite des Wälzlagers (4) vorgesehen und die andere Seite des Wälzlagers (4) abgedichtet ist.

14. Lagergehäuse nach einem der Ansprüche 1 bis 13, dadurch gekennzeichnet, daß die Welle (2) mit einer berührungslosen Dichtung (82) zum Lagergehäuse (1) hin abgedichtet ist und daß eine Kupplung (81) außerhalb des Lagergehäuses (1) mit einer Abdeckhaube (84) vorgesehen ist, die die von der Kupplung (81) erzeugte Luftbewegung in Richtung zum Lagergehäuse (1) umlenkt.

## Claims

1. Bearing housing having a rolling bearing (4) which surrounds a horizontal shaft (2) and is separated from an oil sump area (14), which is at least 3 cm deep, by a baffle plate (21), the upper edge (23) of which at its lowest point lies above the oil level (15, 16) in the oil sump area, a connection (25, 38) between the rolling bearing and the oil sump area being provided below the upper edge and the connection comprising a line which reaches down into the lower half of the oil sump area, characterised in that the oil level (15, 16) is at a higher level than the lowest surface of a rolling body (18) of the rolling bearing (4), which serves as a pump for an oil flow running via the bearing (4) and in that the connection (25, 38) forms the suction line of the oil flow and has a throttling cross section (25).

2. Bearing housing according to claim 1, characterised in that the line (58) is a bore hole in the bearing housing (56) (Figure 3).

3. Bearing housing according to claim 1 or 2, characterised in that provided for the backflow of the oil from the rolling bearing region to the oil sump area (61) there are openings (68, 69, 70), the level of which lies between the shaft centre and the maximum permissible oil level (74) in the oil sump area (61).

4. Bearing housing according to claim 3, characterised in that an opening (78, 79), which serves the purpose of ventilation towards the oil sump area (61), is present above the shaft centre.

5. Bearing housing according to one of the claims 1 to 4, characterised in that a conveying arrangement which conveys oil back into the oil sump area is provided in the form of a narrow gap (28) in a part of the rolling bearing area in which the movable part of the rolling bearing (4) extends upwards and in that the gap (28) reaches beyond the lowest point (23) of the upper edge (22) to an outlet opening (24) which leads from the region of the rolling bearing (4) into the oil sump area (14).

6. Bearing housing according to claim 5, characterised in that the gap (28) is limited by the baffle plate (22).

7. Bearing housing according to claim 5 or 6, characterised in that the gap (28) leads to several outlet openings (24) at different heights.

8. Bearing housing according to claim 5, 6 or 7, characterised in that the outlet opening (24) forms with its end (36) facing the rolling bearing (4) a wedge which is directed towards the direction of movement of the rolling bearing (4).

9. Bearing housing according to claim 8, characterised in that the point of the wedge (36) rests against the rolling bearing.

10. Bearing housing according to one of the claims 5 to 9, characterised in that the gap (28) is limited by an annular disc (21) which is arranged on a face of the rolling bearing (4) and has on the side remote from the rolling bearing (4) a tube (38) which forms the connection line between the oil sump area (14) and the rolling bearing area (4).

11. Bearing housing according to claim 10, characterised in that the tube (38) leads into a recess (46) in the side of the annular disc (21) which faces the rolling bearing (4) and which has a cross section which is several times greater than the tube (38).

12. Bearing housing according to claim 10 or 11, characterised in that the end (39) of the tube (38) which is remote from the disc (21) is accessible through a bore hole (41) in the bearing housing.

13. Bearing housing according to one of the claims 1 to 12, characterised in that the gap (28) is only provided on one face of the rolling bearing (4) and the other side of the rolling bearing (4) is sealed.

14. Bearing housing according to one of the claims 1 to 13, characterised in that the shaft (2) is sealed with a contactless seal (82) to the bearing housing (1) and in that a coupling (81) is provided outside the bearing housing (1), having a cover (84) which deflects the air movement produced by the coupling (81) in the direction of the bearing housing (1).

**Revendications**

1. Logement de palier comportant un palier à roulement (4), qui entoure un arbre horizontal (2) et est séparé d'un espace (14) formant réservoir d'huile, d'une profondeur d'au moins 3 cm, par une paroi de retenue (21), dont le bord supérieur (23) est situé, au niveau de son emplacement le plus profond, au-dessus du niveau (15,16) de l'huile dans l'espace formant réservoir d'huile, et dans lequel une liaison (25, 38) est prévue, au-dessous du bord supérieur, entre le palier à roulement et l'espace formant réservoir d'huile et englobe une conduite qui s'étend vers le bas dans la moitié inférieure de l'espace formant réservoir d'huile, caractérisé par le fait que le niveau (15, 16) de l'huile est situé au-dessus de la surface la plus basse d'un corps (18) du roulement du palier à roulement (4), qui sert de pompe pour l'entraînement d'un écoulement d'huile circulant dans le palier (4), et que la liaison (25,28) forme la conduite d'aspiration de l'écoulement d'huile et possède une section transversale d'étranglement (25).

2. Logement de palier suivant la revendication 1, caractérisé par le fait que la conduite (58) est un perçage ménagé dans le logement de palier (56) (figure 3).

3. Logement de palier suivant la revendication 1 ou 2, caractérisé par le fait que pour le retour de l'huile depuis la zone de palier à roulement jusque dans l'espace (61) formant réservoir d'huile, il est prévu des ouvertures (68, 69, 70), dont le niveau est situé entre le milieu de l'arbre et le niveau maximal admissible (74) de l'huile dans l'espace (61) formant réservoir d'huile.

4. Logement de palier suivant la revendication 3, caractérisé par le fait qu'au-dessus du milieu de l'arbre se trouve disposée une ouverture (78, 79) servant à désaérer l'espace (61) formant réservoir d'huile.

5. Logement de palier suivant l'une des revendications 1 à 4, caractérisé par le fait qu'il est prévu un dispositif d'entraînement, qui ramène l'huile dans l'espace formant réservoir d'huile et se présente sous la forme d'une fente étroite (28) qui s'étend dans une partie de l'espace occupé par le palier à roulement et dans laquelle la partie mobile du palier à roulement (4) s'étend vers le haut, et que la fente (28) s'étend, au-delà du point le plus bas (23) du bord supérieur (22), jusqu'à une ouverture de sortie (24) qui débouche, hors de la zone du palier à roulement (4), dans l'espace (14) formant réservoir d'huile.

6. Logement de palier suivant la revendication 5, caractérisé par le fait que la fente (28) est limitée par la paroi de retenue (22).

7. Logement de palier suivant la revendication 5 ou 6, caractérisé par le fait que la fente 28 aboutit à plusieurs ouvertures de sortie (24), dont les positions en hauteur sont différentes.

8. Logement de palier suivant la revendication 5,6 ou 7, caractérisé par le fait que l'ouverture de sortie (24) forme, avec son extrémité (36) tournée vers le palier à roulement (4), un coin dirigé vers la direction de déplacement du palier à roulement (4).

9. Logement de palier suivant la revendication 8, caractérisé par le fait que la pointe du coin (36) s'applique contre le palier à roulement.

10. Logement de palier suivant l'une des revendications 5 à 9, caractérisé par le fait que la fente (28) est limitée par un disque annulaire (21), qui est disposé sur une face frontale du palier à roulement (4) et comporte, sur la face tournée à l'opposé du palier à roulement (4), un tube (38), qui forme la conduite de liaison entre l'espace (14) formant réservoir d'huile et l'espace (4) occupé par le palier à roulement.

11. Logement de palier suivant la revendication 10, caractérisé par le fait que le tube (38) aboutit dans un renfoncement (46) ménagé dans la face du disque annulaire (21), qui est tournée vers le palier à roulement (4) et possède une section transversale d'une taille plusieurs fois supérieure à celle du tube (38).

12. Logement de palier suivant la revendication 10 ou 11, caractérisé par le fait que l'extrémité (39) du tube (38), située à l'opposé du disque (21). est accessible par un perçage (41) ménagé dans le logement de palier.

13. Logement de palier suivant l'une des revendications 1 à 12, caractérisé par le fait que la fente (28) est prévue uniquement au niveau d'une face frontale du palier à roulement (4) et que l'autre face du palier à roulement (4) est étanchéifiée.

14. Logement de palier suivant l'une des revendications 1 à 13, caractérisé par le fait que l'arbre (2) est étanchéifié par rapport au logement de palier (1) au moyen d'une garniture d'étanchéité sans contact (82) et qu'il est prévu, à l'extérieur du logement de palier (1), un accouplement (81) muni d'un capot de revêtement (84), qui dévie le courant d'air produit par l'accouplement (81), en direction du logement de palier (1).

FIG 1

FIG 2

FIG 3

FIG 4